# EUROPÄISCHE PATENTSCHRIFT

(11) **EP 0 816 458 B1**
(45) Veröffentlichungstag und Bekanntmachung des Hinweises auf die Patenterteilung: **04.09.2002**
(21) Anmeldenummer: 97109903.1
(22) Anmeldetag: 18.06.1997
(51) Int. Cl.: C09J 7/02

(54) **Verwendung eines Streifens einer Klebfolie**
Use of an adhesive tape
Utilisation d'un ruban adhésif

(30) Priorität: 06.07.1996 DE 19627400
(43) Veröffentlichungstag der Anmeldung: 07.01.1998
(73) Patentinhaber: Tesa AG, 20253 Hamburg (DE)
(72) Erfinder: Zimmermann, Dieter, 21635 Jork (DE); Lühmann, Bernd, Dr., 22846 Norderstedt (DE)

(56) Entgegenhaltungen:
- EP-A- 0 200 020
- DE-A- 3 331 016
- DE-A- 4 431 914
- US-A- 5 340 629

## Beschreibung

Die Erfindung betrifft die Verwendung eines Streifens einer Klebfolie für eine wiederlösbare Verklebung, wobei der Streifen eine transparenten Anfasser aufweist.

Klebfolien für wiederlösbare Verklebungen, die durch Ziehen in Richtung der Verklebungsebene wieder lösbar sind, sind bekannt und im Handel unter der Bezeichnung "tesa Power-Strips" erhältlich. Damit hergestellte Verklebungen bieten kraftvollen Halt und lassen sich dennoch spurlos wieder lösen ohne Beschädigung des Untergrundes oder der Fügeteile, wie dies in DE 33 31 016 C2 beschrieben ist. Auch in DE 42 33 872 C2 werden derartige Klebfolien zusammen mit einem Haken beschrieben.

Aus DE 42 22 849 C1 sind zudem derartige Produkte bekannt, bei denen der Klebfolienstreifen an seinem einen Ende mit einer UV-undurchlässigen Abdeckung versehen ist die zugleich als Anfasser dient, zu dem Zweck, eine Beschädigung durch UV-Strahlung beim bestimmungsgemäßen Gebrauch zu vermeiden.

Gleichwohl haben die bisherigen Produkte beträchtliche Nachteile bei ihrer Anwendung, insbesondere deswegen, weil sie so verklebt werden müssen, dass aus der Klebfuge ein sichtbarer Anfasser herausragen muss, der vielfach optisch stört und unerwünscht ist. Und auch die Variante gemäß DE 42 22 849 C1 kann diesen Nachteil nicht beheben.

Die DE A 4 431 914 offenbart einen Streifen einer Klebfolie für eine rückstandsfreie wieder lösbare Verklebung, wobei das eine Ende des Streifens beidseits mit einer Abdeckung versehen ist, die auf der der Klebfolie zugewandten Seite adhesiv ist, und die zugleich als Anfasser zum Ziehen dient. Auch dieser Anfasser kann nicht optisch neutral ausgebildet werden, da der mehrschichtige Aufbau aus verschiedenen Massen dies nicht zulässt.

Zwar gibt es Produkte ähnlicher Art mit einem Folienträger, so gemäß WO 92/11332 und WO 92/11333, bei denen sich das Problem des Anfassers aber in anderer Weise stellt, weil nämlich bei solchen Produkten ggf. der Folienträger selbst als Anfasser dienen kann, so gemäß WO 92/11333, S. 11, Z.31-35. Dennoch vermitteln diese Druckschriften keine Lehre, wie denn das Problem eines störenden Anfassers gelöst werden kann, insbesondere nicht dann, wenn Klebmassen gemäß DE 33 31 016 C2 zum Einsatz kommen sollen.

Aufgabe der Erfindung war es, hier Abhilfe zu schaffen, nämlich die Verwendung von Klebfolienstreifen vom Typ DE 33 31 016 C2 so zu gestalten, daß der notwendige Anfasser nicht stört, zugleich aber auch nicht mit Abrissen beim späteren Ziehen an der Klebfolie gerechnet werden muß.

Demgemäß betrifft die Erfindung die Verwendung eines transparenten Anfassers, wie er näher in den Patentansprüchen gekennzeichnet ist.

Die eingesetzten Materialien können vorteilhaft solche sein, wie sie in der DE 33 31 016 C2 beschrieben sind, ebenso deren Verarbeitung. Dies Verhältnis von Abzugskraft zu Reißlast der erfindungsgemäß verwendeten Klebfolie ist dabei größer als 1 : 1,5, insbesondere aber 1 : 2 oder größer. Die hohe Elastizität (Dehnfähigkeit) bei gleichzeitig hoher Reißfestigkeit korreliert in aller Regel auch mit einer geringen Plastizität.

Als Elastomere eignen sich insbesondere solche von hoher Reißfestigkeit und hohem Dehnvermögen.

Bevorzugt eingesetzt werden können Blockcopolymere mit Blöcken bestehend aus Poly(vinylaromaten) und Blöcken bestehend aus Poly(1,3-Dienen) respektive deren Hydrierungsprodukte. Die Polyvinylaromatenblöcke verleihen den Materialien die kohäsiven Eigenschaften und steuern damit wesentlich ihre Reißfestigkeit. Die Polydienblöcke bzw. die aus ihnen durch Hydrierung gewonnenen Folgeprodukte verleihen den Materialien ihre elastischen Eigenschaften. Als Polyvinylaromat wird vornehmlich Polystyrol eingesetzt, als Elastomerblöcke finden bevorzugt Poly(butadien) und Poly(isopren) sowie deren Hydrierungsprodukte, Poly(Ethylen/Butylen) und Poly(Ethylen/Propylen) Verwendung.

Geeignet sind primär Dreiblockcopolymere mit Polystyrolendblöcken, nachfolgend als S abgekürzt und einem Elastomermittelblock, nachfolgend als D abgekürzt (SDS-Dreiblockcopolymere). Diese können SD-Zweiblockcopolymer enthalten. Geeignet sind prinzipiell auch lineare (SD)ₙ-, radiale und sternförmige (SD)ₙX-Multiblockcopolymere, oder auch Gemische mehrerer der zuvor genannten Blockcopolymere.

Als Klebrigmacher können die üblichen Klebharze wie z.B. Kohlenwasserstoffharze, Polyterpenharze und Terpenphenolharze sowie Kolophonium und Kolophoniumderivate eingesetzt werden. Die Rezeptierung erfolgt nach den allgemeinen Regeln.

Als weitere Abmischkomponenten können die Klebemassen u.a. enthalten:
- Weichmacheröle.
- Alterungsschutzmittel z.B. in Form von Antioxidantien und UV-Stabilisatoren.
- Füllstoffe, Rezepturbestandteil können sowohl anorganische als auch organische Füllstoffe insbesondere auch Pigmente sein.
- Vernetzer.

Geeignete Haftklebemassen können aus Lösung, aus Dispersion oder als Schmelzhaftkleber verarbeitet werden. Bevorzugt eignet sich die Verarbeitung aus der Schmelze, da mit ihr hohe Masseaufträge bei gleichzeitig hohen Beschichtungsgeschwindigkeiten erzielt werden können.

Geeignet sind Standard-Schmelzhaftkleberbeschichtungsanlagen mit z.B. Breitschlitzdüse, Rollstabdüse oder mit einer geeigneten Düse versehene Ein- und Zweischneckenextruder.

Der transparente Anfasser besteht insbesondere aus einer elastischen Kunststoffolie bzw. einem elastischen Träger. Diese sind insbesondere Elastomere mit einem Rückstellvermögen von > 50%, bevorzugt mit einem Rückstellvermögen > 80%: Während des Ablösevorgangs der verklebten Produkte treten durchschnittlich Dehnungen von 100 bis 450% auf. Es können aber auch Werte von bis zu 1500% auftreten. Die auftretende Dehnung ist dabei im wesentlichen vom Zug-Dehnungsverhalten des eingesetzten Elastomertyps, der Dicke des Trägers und von der erreichten Verklebungsfestigkeit der Klebfolien abhängig.

In jedem Fall muß für ein rückstandsfreies Wiederablösen vom Untergrund bzw. aus der Klebfuge gelten, daß die Reißfestigkeit der Klebfolie höher als deren Ablösekraft (Stripkraft) ist. Bevorzugt liegt das Verhältnis Reißkraft zu Stripkraft bei > 1,5, besonders bevorzugt bei > 2,50.

Die Reißfestigkeit der hier beschriebenen Klebfolien wird insbesondere von Art und Dicke der verwendeten Trägerfolien bestimmt. Für Träger auf Basis von Styrolblockcopolymeren mit linearer Dreiblockstruktur und Blockpolystyrolgehalten von ca. 15 bis 40 Gew.-% beträgt die minimale Trägerdicke für doppelseitig haftklebrige Klebfolien bei Klebkräften von > ca. 5 N/cm etwa 50 µm (siehe Beispiele). Unterhalb dieser Grenze ist die Reißfestigkeit üblicherweise zu gering für ein rückstandsfreies Wiederablösen. Für Haftgründe mit hoher Adhäsion gegenüber den eingesetzten Klebstoffolien (hohe Klebkräfte) erhöht sich die minimal nötige Trägerdicke entsprechend.

Bevorzugte Elastomere sind:
1. Styrolblockcopolymere
   Geeignet sind Styrol-Isopren- und Styrol-Butadien-Blockcopolymere sowie deren Hydrierungsprodukte Styrol-Ethylen/Butylen- und Styrol-Ethylen/Propylen-Blockcopolymere. Erfindungsgemäße Blockcopolymere können lineare SES (S bezeichnet den Polystyrolblock, E den Elastomerblock) Dreiblockpolymere aber auch radiale und sternförmige (SE)ₓ Blockcopolymere (x bezeichnet die n-funktionelle Kopplungskomponente) mit n ≥ 3 und lineare (SE)ₙ-Blockpolymere sein.
   Typische Blockpolystyrolgehalte liegen im Bereich von ca. 8 bis 50 Gew.%, bevorzugt zwischen ca. 15 und 45 Gew.-%. Der SE-Zweiblockgehalt ist bevorzugt zu < 50% zu wählen.
2. Naturkautschuk
3. Polyisopren
4. Polybutadien
5. Polychloropren-Kautschuk
6. Butylkautschuk
7. Silikonkautschuk
8. EPDM-Kautschuk oder Ethylen-Propylen-Copolymere
9. Polyurethane (z.B. Walopur 2201/Wolff Walsrode, Platilon UO 1/Atochem, Desmopan/Bayer, Elastollan/Elastogran)
10. Vinyl-Copolymere
10 a. Ethylen-Vinylacetat-Copolymere (z.B. Fa. M & W: 524.060, Fa. Exxon, Exxtraflex Film)
10 b. Vinylchlorid-Acrylat-Copolymere
11. Polyetherester (z.B. Arnitel/Akzo, Hytrel/Du Pont)
12. Polyether- und esteramide (z.B. Pebax/Atochem, Grilon/Ems-Chemie)
13. Polycarbonat-Polyester-Copolymere
14. Ethylen-Acrylat-Copolymere
15. ABS-Copolymere

Weiterhin können die vorgenannten Elastomere auch als Bestandteil in Polymerblends eingesetzt werden.

Zur Einstellung der mechanischen Eigenschaften kann eine Vernetzung vorgenannter Materialien vorteilhaft sein.

Zur Verbesserung der Verankerung der Haftklebemassen auf dem Zwischenträger kann letzterer einer physikalischen und/oder chemischen Vorbehandlung (Primerung) unterzogen werden. Geeignete Vorbehandlungsmethoden sind z.B. die Corona-, die Flamm-, die Plasmavorbehandlung sowie die Fluorvorbehandlung.

In den folgenden Beispielen soll die Erfindung anhand von Ausführungsbeispielen beschrieben werden, ohne sie damit unnötig einschränken zu wollen. Alle Teile sind Gewichtsteile.

### Beispiel 1

| | |
|---|---|
| 51,5 | Teile lineares SIS-Dreiblockcopolymer mit einem Blockpolystyrolgehalt von 29 Gew.-% und einer Härte gemessen nach Shore A von 60. (Vector 4211), |
| 47,0 | Teile teilhydriertes aromatisches C-9 Kohlenwasserstoffharz mit einem Ring & Ball Erweichungspunkt von 100° C mit einem MMAP-Wert von 58°C und einem DACP-Wert von 16°C. (Regalite S 260), |
| 1,0 | Teile phenolisches Antioxidans (Irganox 1010), |
| 0,5 | Teile Lichtschutzmittel (Polymeres sterisch gehindertes Amin), |

werden in einem Sigma-blade Mischer bei + 160°C bis zur Homogenität geknetet. Die so erhaltene Schmelzhaftklebermasse wird bei 160°C in einer Strichstärke von 410 µm über eine Breitschlitzdüse auf eine beidseitig silikonisierte 80 µm starke Trennfolie aus monoaxial verstrecktem Polypropylen beschichtet.
- Klebmassedicke 410 µm
- Reißkraft*) 3,9 N/mm²
- Reißdehnung*)1100%
- Klebkraft**) ca. 7 N/cm
- Scherstandzeit***) > 20 000 min

*) Verstreckungsgeschwindigkeit: 300 mm/min, Musterlänge: 100 mm
**) Stahl, Abzugswinkel: 90°, Abzugsgeschwindigkeit: 300 mm/min, Klebeband auf 25 µm-PETP-Folie laminiert
***) Stahl, Verklebungsfläche: 13 x 20 mm², Temperatur = RT, 20 N Scherbelastung.

Diese Klebmasse wird beidseitig auf eine 200 µm starke Vector 4461 D Folie (Exxon) beschichtet, wie im Beispiel 3 näher beschrieben.

### Beispiel 2

| | |
|---|---|
| 25,5 | Teile lineares SBS-Dreiblockpolymer mit einem Blockpolystyrolgehalt von 29 Gew.-% und einer Härte gemessen nach Shore A von 65. (Vector 4261), |
| 26,0 | Teile lineares SIS-Dreiblockpolymer mit einem Blockpolystyrolgehalt von 29 Gew.-% und einer Härte gemessen nach Shore A von 60. (Vector 4211), |
| 47,0 | Teile Pentaerythritester von hydriertem Kolophonium mit einem Ring & Ball Erweichungspunkt von 101°C und einer Säurezahl von 12. (Pentalyn H-E), |
| 1,0 | Teile phenolisches Antioxidans (Irganox 1010) |
| 0,5 | Teile Lichtschutzmittel (Polymeres sterisch gehindertes Amin) |

werden wie unter Beispiel 1 verarbeitet und in einer Strichstärke von 200 µm auf die unter Beispiel 1 beschriebene Trennfolie ausgestrichen.
- Klebmassedicke 200 µm
- Klebkraft**) 12,0 N/cm
- Scherstandzeit***) > 10 000 min

**)siehe unter Beispiel 1
***) siehe unter Beispiel 1

Diese Klebmasse wird beidseitig auf eine 200 µm starke Cariflex TR 1101 Folie (Shell) beschichtet, wie in Beispiel 3 näher beschrieben.

Gute Ergebnisse werden auch erzielt, wenn anstatt Cariflex TR 1101 (Shell) Stereon 841 A (Firestone), Kraton G 1657 X (Shell); Walopur 2201 (Wolff-Walsrode) oder Vector 4111 D (Exxon) verwendet wurde.

### Beispiel 3

Ballenware aus den Beispielen 1 und 2 bestehend aus doppelseitigem Haftklebeband mit einseitiger Trennpapierabdeckung und elastischer SBS-Folie (0,2 mm dick), werden mit einer Anlage, bestehend aus mehreren Kaschier- und Dekaschierstationen und einer Rotationsstanze mit Schneidvorrichtung zu Klebestrips verarbeitet.

Auf die 20 cm breite elastische Zwischenfolie (0,2 mm stark) werden jeweils 1 cm vom Rand zwei 8 cm breite, doppelseitig klebende Haftklebebänder (0,3 mm stark auf Trennpapier) kaschiert.

Das gleiche geschieht auf der anderen Seite.

Danach wird rotativ gestanzt, in der Mitte getrennt, und das Produkt ist fertig.

## Patentansprüche

1. Klebfolienstreifen für eine wiederlösbare Verklebung auf Basis von thermoplastischen Kautschuk und klebrigmachenden Harzen und mit einem transparenten Anfasser, wobei der transparente Anfasser aus einer elastischen Kunststoffolie besteht, die bis auf den Anfasserbereich beidseitig mit der Klebfolienmasse beschichtet ist und die Klebfolie hohe Elastizität und geringe Plastizität aufweist, die Adhäsion geringer als die Kohäsion ist, das Haftvermögen beim Dehnen der Folie weitgehend verschwindet, das Verhältnis von Abzugskraft zu Reißlast mindestens 1:1,5 ist und wobei eine damit hergestellte Klebbindung durch Ziehen an der Klebfolienrichtung der Verklebungsebene lösbar ist.

2. Klebfolienstreifen nach Anspruch 1, worin die Masse selbstklebend eingestellt ist.

3. Klebfolienstreifen nach Anspruch 1, wobei die Masse wärmeaktivierbar eingestellt ist.

4. Klebfolienstreifen nach einem der Ansprüche 1 bis 3, wobei die Masse Antioxidantien, UV-Stabilisatoren, Farbstoff, Füllstoff und/oder andere übliche Hilfsmittel enthält.

5. Klebfolienstreifen nach einem der Ansprüche 1 bis 4, wobei der Streifen eine Dicke von 0,2 mm bis 1,2 mm hat.

6. Klebfolienstreifen nach einem der Ansprüche 1 bis 5, wobei sich die Abzugskraft der Klebfolie zur Reißlast wie 1:1,5 bis 1:5 verhält.

7. Klebfolienstreifen nach einem der Ansprüche 1 bis 6, wobei der transparente Anfasser aus einem Träger (Folie) mit einem Rückstellvermögen von mindestens 50% besteht.

## Claims

1. Adhesive film strip for a temporary bond based on thermoplastic rubber and tackifier resins and having a transparent grip tab, where the transparent grip tab consists of an elastic polymer film which except for the grip-tab region is coated on both sides with the adhesive film composition and the adhesive film is of high elasticity and low plasticity, and where the adhesion is lower than the cohesion, the adhesion largely disappears when the film is extended, the ratio of peel force to tensile load is at least 1:1.5, and where an adhesive bond produced therewith can be detached by pulling on the adhesive film direction [sic] of the bond plane.

2. Adhesive film strip according to Claim 1, wherein the composition is formulated to be self-adhesive.

3. Adhesive film strip according to Claim 1, wherein the composition is formulated to be heat-activatable.

4. Adhesive film strip according to one of Claims 1 to 3, where the mass comprises antioxidants, UV stabilizers, colorants, fillers and/or other customary auxiliaries.

5. Adhesive film strip according to one of Claims 1 to 4, where the strip has a thickness of from 0.2 mm to 1.2 mm.

6. Adhesive film strip according to one of Claims 1 to 5, where the ratio of the peel force of the adhesive film to the tensile load is from 1:1.5 to 1:5.

7. Adhesive film strip according to one of Claims 1 to 6, where the transparent grip tab consists of a backing (film) with a resilience of at least 50%.

## Revendications

1. Bandes de pellicules adhésives pour un collage redétachable, à base de caoutchouc thermoplastique et de résines conférant l'adhésivité, et comportant une partie de préhension transparente, la partie de préhension transparente consistant en une pellicule en matière plastique élastique, qui est revêtue des deux côtés, sur la partie de préhension, avec la matière de la pellicule adhésive, et la pellicule adhésive présente une grande élasticité et une faible plasticité, l'adhérence est plus faible que la cohésion, la force d'adhérence disparaît dans une large mesure lors du tirage de la pellicule, le rapport de la force d'arrachage à la charge de traction est d'au moins 1:1,5, et un assemblage collé ainsi obtenu est détachable par tirage dans le sens du plan dé collage de la pellicule adhésive.

2. Bandes de pellicules adhésives selon la revendication 1, dans lasquelles la matière est rendue autoadhésive.

3. Bandes de pellicules adhésives selon la revendication 1, dans lasquelles la matière est rendue activable à la chaleur.

4. Bandes de pellicules adhésives selon l'une quelconque des revendications 1 à 3, dans lasquelles la matière contient des antioxydants, des stabilisants UV, un colorant, une charge et/ou d'autres adjuvants usuels.

5. Bandes de pellicules adhésives selon l'une quelconque des revendications 1 à 4, dans lasquelles la bande a une épaisseur de 0,2 mm à 1,2 mm.

6. Bandes de pellicules adhésives selon l'une quelconque des revendications 1 à 5, dans lasquelles le rapport de la force d'arrachage de la pellicule adhésive à la charge de rupture va de 1:1,5 à 1:5.

7. Bandes de pellicules adhésives selon l'une quelconque des revendications 1 à 6, dans lasquelles la partie de préhension transparente consiste en un support (pellicule) ayant un pouvoir de rappel d'au moins 50 %.
